# FASCICULE DE BREVET EUROPEEN

(11) **EP 0 709 429 B1**
(45) Date de publication et mention de la délivrance du brevet: **05.08.1998**
(21) Numéro de dépôt: 95202833.0
(22) Date de dépôt: 19.10.1995
(51) Int. Cl.: C08L 27/16

(54) **Compositions à base de copolymères du fluorure de vinylidène comprenant du polychlorure de vinyle et leur utilisation en câblerie**
Zusammensetzungen basierend auf VDF-Copolymerisaten enthaltend PLF und ihre Verwendung in Kabel
Compositions based on VDF-copolymers comprising PVC and their utilization in cable

(30) Priorité: 24.10.1994 BE 9400957
(43) Date de publication de la demande: 01.05.1996
(73) Titulaire: SOLVAY (Société Anonyme), B-1050 Bruxelles (BE)
(72) Inventeur: Thulliez, Vincent, B-1030 Bruxelles (BE); Lambert, Yves-Julien, B-1325 Chaumont-Gistoux (BE); Laurent, Guy, B-5020 Vedrin (BE); Declerck, Fredy, B-1850 Grimbergen (BE)
(74) Mandataire: Marckx, Frieda

(56) Documents cités:
- US-A- 5 322 899
- CHEMICAL ABSTRACTS, vol. 122, no. 16, 17 Avril 1995 Columbus, Ohio, US; abstract no. 189846, 'flame- and impact resistant vinyl chloride polymer compositions' page 132; & JP-A-06 248 141 (SEKISUI CHEMICAL KK) 6 Octobre 1994

## Description

La présente invention concerne des compositions à base de copolymères du fluorure de vinylidène et de polychlorure de vinyle, ainsi que leur utilisation pour le gainage de câbles électriques. Elle concerne plus particulièrement de telles compositions contenant en outre un polymère méthacrylique.

Dans la demande de brevet EP-A-0 294 755, on décrit des compositions pour l'enduction de substrats divers en vue de produire des enduits adhérents et durs présentant une excellente résistance chimique qui comprennent, pour 100 parties en poids au total, (A) de 10 à 95 parties de résine de fluorure de vinylidène, (B) de 1 à 80 parties d'une résine ayant une faible compatiblité avec la résine de fluorure de vinylidène et (C) de 1 à 30 parties de résine ayant une excellente compatibilité avec les résines (A) et (B), généralement une résine acrylique ou méthacrylique. Le polychlorure de vinyle est cité parmi les résines (B) utilisables dans les compositions mais tous les exemples de réalisation mettent en oeuvre une résine (B) de type durcissable contenant des groupements fonctionnels réactifs, telle qu'une résine époxyde, une résine phénolique etc. Ces compositions sont appliquées sur les substrats à l'état de solution ou de dispersions dans des solvants organiques, puis cuites à température élevée pour former un film adhérant sur le substrat.

Dans le brevet US-A-5322899, on décrit des compositions polymériques utilisables comme matériaux "capstock" durs (résistant aux chocs) et durables présentant une bonne adhérence vis-à-vis des matériaux thermoplastiques (substrats) qu'ils doivent protéger. Les compositions polymériques comprennent de 30% à 80 % d'un polymère fluoré ainsi que de 5 % à 50 % d'un premier polymère acrylique qui est le produit de la polymérisation de monomères dont le constituant principal est l'acrylate de méthyle et de 5 % à 50 % d'un second polymère acrylique qui est le produit de la polymérisation de monomères dont le constituant principal est le méthacrylate d'éthyle. Dans un exemple, une faible quantité de PVC est ajoutée en tant que diluant lorsque le substrat est également du PVC.

Dans Chemical Abstracts, vol. 122, n° 16, abstract n° 189846 (abrégé de JP-06248141) on décrit des compositions polymériques du chlorure de vinyle présentant une résistance au feu et aux chocs, utilisables pour produire des articles moulés ayant une fumigénicité et une accumulation de chaleur très faibles. Ces compositions comprennent 100 parties d'un mélange de 60 - 99 % de polymères du chlorure de vinyle, 1 - 40 % de poly(fluorure de vinylidène) et 1 - 30 parties d'agents ignifugeants.

La présente invention a pour objet de procurer des compositions à base de copolymères du fluorure de vinylidène qui présentent des propriétés diélectriques améliorées.

Il est bien connu que les polymères du fluorure de vinylidène, homo- et copolymères avec des comonomères halogénés, présentent un indice limite d'oxygène élevé et une faible propagation de la flamme, en d'autres termes une résistance élevée au feu et, par ailleurs, une très faible fumigénicité, c'est-à-dire qu'ils émettent très peu de fumées lors de leur combustion. A ces propriétés intéressantes sur le plan de la résistance au feu, ils allient une résistance élevée au vieillissement thermique, c'est-à-dire que leurs propriétés mécaniques telles que l'allongement et la tension à la rupture en traction ne sont pas notablement modifiées après un vieillissement thermique prolongé à des températures supérieures à 100 °C.

C'est précisément en raison de cet ensemble de propriétés intéressantes que les polymères du fluorure de vinylidène et plus particulièrement encore ses copolymères avec des comonomères halogénés, généralement plus souples que les homopolymères, trouvent des applications dans le domaine du gainage de câbles électriques et de fibres optiques. Néanmoins, les polymères du fluorure de vinylidène présentent des propriétés diélectriques non optimales et en particulier une constante diélectrique et des pertes diélectriques à fréquence élevée (c'est-à-dire supérieure à 1 MHz) relativement importantes.

Les polymères du chlorure de vinyle, plus spécifiquement le polychlorure de vinyle, présentent des propriétés diélectriques plus intéressantes que les polymères du fluorure de vinylidène et, en particulier une constante diélectrique et des pertes diélectriques à haute fréquence (> à 1 MHz) moins élevées. A ce titre, ils ont également dejà été proposés pour le gainage de câbles électriques. Néanmoins, les polymères du chlorure de vinyle présentent une résistance au feu, notamment un indice limite d'oxygène plus faible et donc une inflammabilité plus élevée, que les polymères du fluorure de vinylidène. Par ailleurs, lors de leur combustion ils émettent nettement plus de fumées que les polymères du fluorure de vinylidène. De plus, il est généralement nécessaire de leur incorporer des quantités appréciables de plastifiants pour leur conférer la souplesse nécessaire pour le gainage de câbles, ce qui a généralement pour effet de diminuer encore la résistance au feu et d'augmenter la fumigénicité.

La présente invention a pour objet de procurer des compositions à base de copolymères du fluorure de vinylidène et de polymères du chlorure de vinyle utilisables, notamment, pour le gainage de câbles électriques, qui ne présentent aucun des inconvénients précités et qui, en particulier, allient d'excellentes propriétés diélectriques, de résistance au vieillissement thermique et de résistance au feu.

A cet effet, l'invention concerne des compositions à base de copolymères du fluorure de vinylidène présentant des propriétés diélectriques améliorées, caractérisées en ce qu'elles sont constituées essentiellement d'un copolymère thermoplastique du fluorure de vinylidène et de comonomères fluorés éthyléniquement insaturés contenant au moins 75 % en poids d'unités monomériques dérivées du fluorure de vinylidène et de polychlorure de vinyle, ainsi que d'une quantité efficace de polymère méthacrylique.

Le polymère méthacrylique présent dans les compositions selon l'invention est choisi parmi les homopolymères du méthacrylate de méthyle et ses copolymères à teneur prépondérante en méthacrylate de méthyle avec des acrylates et/ou des méthacrylates d'alkyles. Des résultats avantageux sont obtenus avec les copolymères de méthacrylate de méthyle et d'acrylates d'alkyles en C2 à C6. D'excellents résultats sont obtenus avec les copolymères de méthacrylate de méthyle et d'acrylates d'alkyles en C2 à C4, tels que par exemple l'acrylate de butyle.

La teneur des copolymères en méthacrylate de méthyle est généralement d'au moins environ 55 % en poids et de préférence d'au moins environ 60 % en poids. Généralement, elle ne dépasse pas environ 90 % en poids, le plus souvent elle ne dépasse pas 80 % en poids.

Avantageusement, le poids moléculaire moyen du polymère méthacrylique est tel qu'une solution contenant 2 g de polymère par litre de cyclohexanone présente, à 25 °C, une viscosité relative au moins égale à 1. Généralement, la viscosité relative à 25 °C d'une telle solution ne dépasse pas 3. De préférence, la viscosité relative, à 25 °C, d'une solution à 2 g de polymère par litre de cyclohexanone est comprise entre 1,4 et 2, 2 environ.

Par quantité efficace de polymère méthacrylique, on entend une quantité au moins suffisante pour assurer une compatibilisation entre le copolymère du fluorure de vinylidène et le polychlorure de vinyle telle qu'elle se traduit, par exemple, par la présence d'un pic unique de température de transition vitreuse pour le mélange. Les quantités optimales de polymère méthacrylique dépendent essentiellement de la composition chimique du polymère méthacrylique et des teneurs respectives en copolymère du fluorure de vinylidène et en polychlorure de vinyle des compositions selon l'invention. Elles seront donc avantageusement évaluées dans chaque cas particulier par voie expérimentale. Pour fixer les idées, la quantité de polymère méthacrylique s'élève généralement à au moins environ 2 parties en poids et, le plus souvent à au moins environ 4 parties en poids pour 100 parties en poids au total de copolymère de fluorure de vinylidène et de polychlorure de vinyle. Généralement, cette quantité n'excède pas environ 20 parties en poids, le plus souvent elle n'excède pas environ 15 parties en poids pour 100 parties en poids au total de copolymère du fluorure de vinylidène et de polychlorure de vinyle.

Les copolymères thermoplastiques du fluorure de vinylidène, ci-après désignés par le vocable co-PVDF, mis en oeuvre dans les compositions de l'invention présentent avantageusement une température de fusion au moins égale à environ 130 °C et, de préférence, au moins égale à environ 150 °C et plus particulièrement encore au moins égale à 165 °C. A titre d'exemples de comonomères fluorés utilisables, on peut mentionner en particulier l'hexafluorpropylène et le chlortrifluoréthylène, ce dernier étant préféré.

Selon une variante avantageuse de la présente invention le co-PVDF est un copolymère de fluorure de vinylidène et d'hexafluorpropylène contenant de 5 à 20 % en poids environ d'hexafluorpropylène et plus particulièrement encore de 8 à 15 % en poids environ. Ces derniers copolymères présentent des températures de fusion d'environ 160 à environ 135 °C.

Selon une variante particulièrement avantageuse de la présente invention le co-PVDF est un copolymère de fluorure de vinylidène et de chlortrifluoréthylène contenant de 10 à 25 % en poids environ de chlortrifluoréthylène et plus particulièrement encore de 12 à 22 % en poids environ. Ces derniers copolymères particulièrement préférés présentent des températures de fusion d'environ 170 à environ 165 °C.

Le mode d'obtention des copolymères fluorés n'est pas critique. Ceux-ci peuvent donc être fabriqués par tous les procédés connus et usuels pour préparer des copolymères du fluorure de vinylidène tels que, par exemple, la polymérisation en émulsion aqueuse, en suspension aqueuse ou en dispersion aqueuse encore appelée en microsuspension aqueuse. Par ailleurs, ils peuvent être homogènes (répartition régulière des unités monomériques du comonomère au sein des chaînes polymériques) ou hétérogènes (répartition irrégulière desdites unités monomériques au sein des chaînes polymériques du copolymère).

Les copolymères préférentiellement mis en oeuvre dans les compositions selon l'invention sont avantageusement issus de la copolymérisation en suspension aqueuse avec mise en oeuvre de la totalité du fluorure de vinylidène et du chlortrifluoréthylène au départ de la copolymérisation (ce qui conduit à l'obtention de copolymères hétérogènes) et en présence des ingrédients usuels de ce type de polymérisation, à savoir essentiellement un agent dispersant (tel que, par exemple, l'éthylhydroxyéthylcellulose), un initiateur oléosoluble (tel que, par exemple, le perpivalate de tert-amyle) et un agent régulateur de chaînes (tel que, par exemple, du carbonate de diéthyle).

Par polychlorure de vinyle, on entend désigner aux fins de la présente invention, les homopolymères du chlorure de vinyle et ses copolymères contenant au maximum environ 25 % en poids de comonomères éthyléniquement insaturés. Ces copolymères peuvent être des copolymères statistiques, des copolymères à blocs ou encore des copolymères greffés sur un tronc polymérique quelconque. A titre d'exemples de comonomères du chlorure de vinyle, on peut citer les oléfines tels que l'éthylène et le propylène et les esters tels que l'acétate de vinyle et les acrylates et les méthacrylates d'alkyles. Le polychlorure de vinyle mis en oeuvre dans les compositions selon l'invention peut être indifféremment obtenu par tout procédé connu de polymérisation tel que la polymérisation en suspension ou en émulsion aqueuse. Le plus souvent, il présente un nombre K (mesuré à 25 °C dans le cyclohexane à 5 g/l) d'environ 50 à environ 80.

Les compositions selon l'invention contiennent une quantité prépondérante de co-PVDF par rapport au polychlorure de vinyle (PVC). Le rapport pondéral du copolymère du fluorure de vinylidène au polychlorure de vinyle (co-PVDF/PVC) présents dans les compositions est généralement au moins égal à 1,20 et le plus souvent au moins égal à 1,5. D'excellents résultats sont obtenus avec un rapport pondéral co-PVDF/PVC au moins égal à 1,8.

Généralement, le rapport pondéral co-PVDF/PVC ne dépasse pas 9. Le plus souvent ce rapport ne dépasse pas 6. D'excellents résultats sont obtenus avec un rapport pondéral co-PVDF/PVC ne dépassant pas 4.

Outre les polymères du fluorure de vinylidène (co-PVDF) et du chlorure de vinyle (PVC) et le polymère méthacrylique définis ci-dessus et qui représentent les constituants essentiels des compositions selon l'invention, celles-ci peuvent bien entendu contenir tous les ingrédients usuels de mise en oeuvre de chacun des polymères constitutifs des compositions selon l'invention (tels que des stabilisants thermiques, des lubrifiants, le cas échéant des plastifiants), de même que des additifs divers tels que des charges, des pigments et/ou des colorants, des agents ignifuges, des agents fumicides, etc.

Il peut être utile d'incorporer de faibles quantités de plastifiants dans les compositions selon l'invention en vue d'éviter tout problème de soudure de flux en fondu lors de la mise en oeuvre. Pour ce faire, on peut faire appel à un ou plusieurs plastifiants usuels des polymères du fluorure de vinylidène et du chlorure de vinyle, tels que par exemple les phtalates et les sébaçates de dialkyles (tels que les phatalates de dioctyle et de diéthylhexyle et le sébaçate de dibutyle) ou encore des plastifiants du type des polyesters dérivés d'acides alkanedicarboxyliques (tels que les acides adipique, azélaïque ou sébacique) et de diols, plus spécialement de diols aliphatiques, et qui présentent une masse moléculaire d'au moins environ 1500, de préférence d'au moins 1800 et qui ne dépasse pas environ 5000, de préférence inférieure à 3500. Les plastifiants du type des polyesters conviennent particulièrement bien. La quantité de plastifiant ne dépassera généralement pas 15 % en poids de la composition totale et le plus souvent pas 12 % en poids de la composition totale.

Alors que les mélanges de copolymères du fluorure de vinylidène et de polychlorure de vinyle exempts de polymère méthacrylique sont hétérogènes (dispersion de nodules grossiers de polychlorure de vinyle dans la phase continue de copolymère du fluorure de vinylidène) et procurent des articles façonnés présentant un aspect de surface rugueux, les compositions selon l'invention sont parfaitement homogènes et procurent des articles façonnés présentant un bel aspect de surface lisse et brillant.

Un effet surprenant des compositions selon l'invention réside dans le fait que moyennant l'incorporation d'une quantité efficace de polymère méthacrylique, les compositions à base de copolymères du fluorure de vinylidène comprenant du polychlorure de vinyle en quantité mineure présentent des propriétés diélectriques, en particulier une constante et des pertes diélectriques substantiellement améliorées par comparaison avec des compositions exclusivement à base de co-PVDF et se rapprochant de celles de compositions exclusivement à base de polychlorure de vinyle.

Les compositions selon l'invention peuvent être fabriquées de toute manière connue et usuelle pour mélanger des polymères et leurs divers ingrédients de mise en oeuvre et additifs. Elles peuvent, par exemple, être fabriquées par mélange, en une seule ou en plusieurs opérations, de tous les ingrédients dans un mélangeur rapide à faible température pour produire des compositions non prégélifiées se présentant à l'état de poudre, généralement appelées prémélanges ("premix"). Elles peuvent également être fabriquées par mélange, en une seule ou en plusieurs opérations, de tous les ingrédients dans une extrudeuse dans laquelle le mélange est porté à une température au moins égale à la température de fusion du co-PVDF pour produire des mélanges prégélifiés généralement appelés "compound". Avantageusement, les compositions selon l'invention se présentent à l'état de compound (mélange prégélifié) et en particulier à l'état de granules.

Les compositions selon l'invention peuvent être mises en oeuvre par toutes les techniques classiques de transformation des matières plastiques à l'état fondu, telles que l'extrusion et l'injection. Elles conviennent tout particulièrement pour la mise en oeuvre par extrusion.

Les objets façonnés à l'intervention des compositions selon l'invention présentent un ensemble de propriétés intéressantes. Ils allient d'excellentes propriétés diélectriques à d'excellentes propriétés mécaniques, y compris après vieillissement thermique. Enfin, si leurs propriétés de résistance au feu (propagation de flamme, émission de fumée, etc.) sont quelque peu réduites par rapport à des objets façonnés à l'intervention de compositions contenant exclusivement des copolymères du fluorure de vinylidène, celles-ci sont toujours amplement suffisantes pour répondre aux normes de sécurité généralement sévères imposées pour des applications dans le domaine de la câblerie.

Les compositions selon l'invention conviennent bien pour le gainage de fibres optiques. Elles conviennent tout particulièrement pour le gainage de câbles électriques, tels que des câbles de communication. L'utilisation des compositions selon l'invention pour le gainage de câbles électriques constitue un autre aspect de la présente invention.

Les exemples qui suivent illustrent l'invention.

### Exemple 1

Cet exemple concerne une composition dans laquelle le copolymère du fluorure de vinylidène est un copolymère de fluorure de vinylidène et de chlortrifluoréthylène contenant 15 % en poids de chlortrifluoréthylène et présentant une température de fusion de 169 °C et un MFI d'environ 5 g/10 min à 230 °C sous 2,16 kg (ASTM D 1238).

Le polymère du chlorure de vinyle est un homopolymère du chlorure de vinyle présentant un nombre K (mesuré à 25 °C dans la cyclohexanone à 5 g/l) de 71.

Le polymère méthacrylique est un copolymère de méthacrylate de méthyle et d'acrylate de butyle contenant 63 % en poids de méthacrylate de méthyle et dont une solution à 2 g/litre de cyclohexanone présente une viscosité relative à 25 °C de 1.96.

La composition illustrant l'invention a été préparée par extrusion dans une extrudeuse double-vis à 180-200 °C de 60 parties en poids de granules de copolymère de VF2-CTFE formulé (dont la composition détaillée figure ci-dessous = composition A) avec 40 parties en poids de granules de polychlorure de vinyle formulé (dont la composition détaillée figure également ci-dessous = composition B) et avec 10 parties du copolymère méthacrylique (en poudre) dont la composition figure ci-dessus.

| Composition A (parties en poids) | |
|---|---|
| copolymère VF2-CTFE | 100 |
| molybdate de calcium | 5 |
| carbonate de calcium précipité enrobé d'acide stéarique | 0,1 |
| cire de polyéthylène | 0,2 |

| Composition B (parties en poids) | |
|---|---|
| polychlorure de vinyle | 100 |
| phtalates (plastifiants) | 46 |
| stabilisants thermiques (au plomb) | 6 |
| kaolin (charge) | 7 |
| cire de polyéthylène | 0,7 |
| oxyde d'antimoine | 4 |

Les granules extrudés au départ de 60 parties en poids de la composition A, 40 parties en poids de la composition B et 10 parties en poids du copolymère méthacrylique contiennent 11 parties en poids de polymère méthacrylique pour 100 parties en poids au total de co-PVDF et de PVC et présentent un rapport pondéral co-PVDF/PVC de 2,3.

A partir de ces granules, on a pressé des plaques de 2 mm d'épaisseur (température matière : environ 200 °C) sur lesquelles ont été évaluées suivant des normes standardisées (ASTM) les propriétés diélectriques (constante et perte diélectrique) et de résistance au feu (ILO = indice limite d'oxygène) et d'émission de fumées (densité maximum avec et sans flamme). Les résultats de ces évaluations sont consignés dans le Tableau en annexe.

Par ailleurs, à partir de ces granules on a extrudé sur une extrudeuse monovis des bandes de 2 mm d'épaisseur (température matière : environ 200 °C) sur lesquelles ont été évaluées suivant des normes standardisées (ASTM et UL) les propriétés mécaniques en traction (contrainte et allongement à la rupture). Les résultats de ces évaluations figurent également dans le Tableau en annexe. Pour les propriétés mécaniques, les chiffres fournis constituent la valeur moyenne évaluée sur cinq éprouvettes.

A titre comparatif y figurent également les résultats évalués au départ de la composition A (cf ci-dessus) constituée essentiellement de co-PVDF et exempte de PVC et de polymère méthacrylique.

La comparaison des résultats atteste de l'amélioration notable des propriétés diélectriques avec maintien des propriétés mécaniques en traction à des valeurs proches de celles de compositions exclusivement à base de copolymère du fluorure de vinylidène.

### Exemple 2

Cet exemple concerne une composition dans laquelle le copolymère de fluorure de vinylidène est un copolymère de fluorure de vinylidène et de chlortrifluoréthylène contenant 20 % en poids de chlortrifluoréthylène et présentant une température de fusion de 165 °C et un MFI d'environ 5 g/10min à 230 °C sous 2,16 kg (ASTM D 1238).

Le polymère du chlorure de vinyle est un homopolymère du chlorure de vinyle présentant un nombre K (mesuré à 25 °C dans la cyclohexanone à 5g/l) de 64.

Le polymère méthacrylique est identique à celui mis en oeuvre à l'exemple 1.

La composition selon l'invention a été préparée par extrusion dans une extrudeuse double-vis à 180-200 °C de 73 parties en poids de granules de copolymère de VF2-CTFE formulé (dont la composition détaillée figure ci-dessous = composition A) avec 27 parties en poids de granules de polychlorure de vinyle formulé (dont la composition détaillée figure également ci-dessous = composition B).

| Composition A (parties en poids) | |
|---|---|
| copolymère VF2-CTFE | 100 |
| molybdate de calcium | 0,45 |
| carbonate decalcium précipité enrobé d'acide stéarique | 0,15 |
| cire de polyéthylène | 0,30 |
| polyester adipique de masse moléculaire | |
| moyenne d'environ 3000 (plastifiant) | 7 |
| copolymère méthacrylique | 7 |

| Composition B (parties en poids) | |
|---|---|
| polychlorure de vinyle | 100 |
| stabilisants thermiques (au plomb) | 10 |
| stéarate de calcium | 2 |
| huile de ricin hydrogénée | 3 |
| carbonate de calcium | 20 |

Les granules ainsi extrudés contiennent environ 5 parties en poids de copolymère méthacrylique pour 100 parties en poids au total de co-PVDF et de PVC et présentent un rapport pondéral co-PVDF/PVC d'environ 3,3.

A partir de ces granules, on a pressé des plaques de 2 mm d'épaisseur (température matière: environ 200 °C) sur lesquelles ont été évaluées les propriétés diéelectriques suivantes selon la norme ASTM D 150:

| | | |
|---|---|---|
| constante diélectrique | à 1 MHz | 5,2 |
| | à 10 MHz | 4,1 |
| pertes diélectriques | à 1 MHz | 0,6 |
| | à 10 MHz | 0,6 |

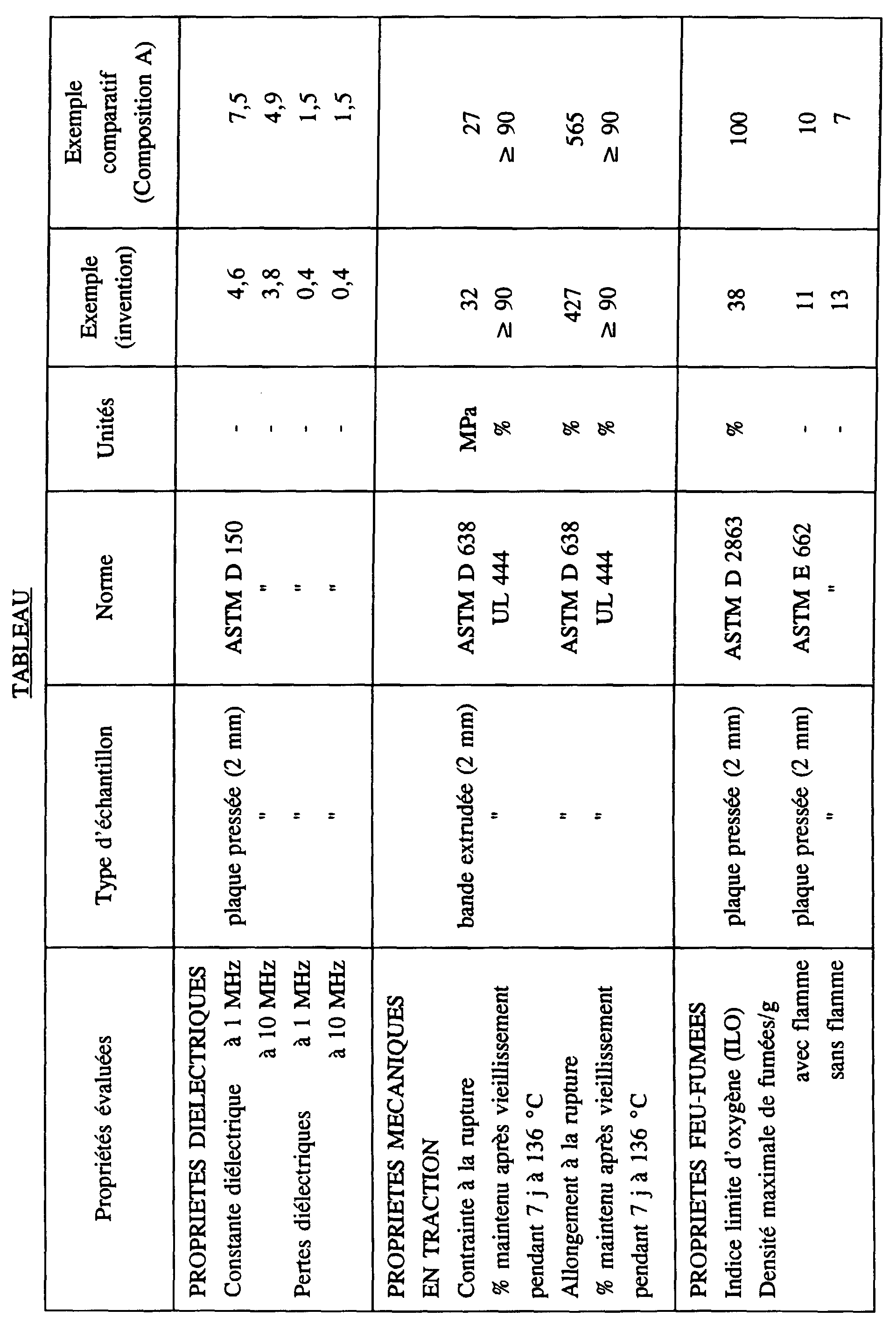

## Revendications

1. Compositions à base de copolymères du fluorure de vinylidène présentant des propriétés diélectriques améliorées, caractérisées en ce qu'elles sont constituées essentiellement d'un copolymère thermoplastique du fluorure de vinylidène et de comonomères fluorés éthyléniquement insaturés contenant au moins 75 % en poids d'unités monomériques dérivées du fluorure de vinylidène et de polychlorure de vinyle, le rapport pondéral du copolymère du fluorure de vinylidène au polychlorure de vinyle est égal à 1,2 au moins et ne dépasse pas 9, ainsi que d'une quantité efficace de polymère méthacrylique présent à raison d'au moins environ 2 parties en poids et de pas plus d'environ 20 parties en poids pour 100 parties en poids au total de copolymère du fluorure de vinylidène et de polychlorure de vinyle.

2. Compositions à base de copolymères du fluorure de vinylidène selon la revendication 1, caractérisées en ce que le polymère méthacrylique est choisi parmi les homopolymères du méthacrylate de méthyle et ses copolymères à teneur prépondérante en méthacrylate de méthyle avec des acrylates et/ou des méthacrylates d'alkyles en C2 à C6.

3. Compositions à base de copolymères du fluorure de vinylidène selon la revendication 2, caractérisées en ce que le polymère méthacrylique est choisi parmi les copolymères de méthacrylate de méthyle et d'acrylates d'alkyles en C2 à C4.

4. Compositions à base de copolymères du fluorure de vinylidène selon l'une quelconque des revendications 1 à 3, caractérisées en ce que le polymère méthacrylique contient au moins environ 55 % en poids de MMA et pas plus de environ 90 % en poids.

5. Compositions à base de copolymères du fluorure de vinylidène selon l'une quelconque des revendications 1 à 4, caractérisées en ce que le polymère méthacrylique est présent à raison d'environ 4 à environ 15 parties en poids pour 100 parties en poids au total de copolymère du fluorure de vinylidène et de polychlorure de vinyle.

6. Compositions à base de copolymères du fluorure de vinylidène selon l'une quelconque des revendications 1 à 5, caractérisées en ce que le copolymère du fluorure de vinylidène est choisi parmi les copolymères de fluorure de vinylidène et de chlortrifluoréthylène contenant de 10 à 25 % en poids environ de chlortrifluoréthylène et les copolymères de fluorure de vinylidène et d'hexafluorpropylène contenant de 5 à 20 % en poids environ d'hexafluorpropylène.

7. Compositions à base de copolymères du fluorure de vinylidène selon la revendication 6, caractérisées en ce que le copolymère du fluorure de vinylidène est un copolymère de fluorure de vinylidène et de chlortrifluoréthylène contenant de 12 à 22 % en poids environ de chlortrifluoréthylène.

8. Compositions à base de copolymères du fluorure de vinylidène selon l'une quelconque des revendications 1 à 7, caractérisées en ce qu'elles se présentent à l'état de compound.

9. Utilisation des compositions à base de copolymères du fluorure de vinylidène selon l'une quelconque des revendications 1 à 8 pour le gainage de câbles électriques.

## Patentansprüche

1. Zusammensetzungen auf der Basis von Vinylidenfluorid-Copolymeren, die verbesserte dielektrische Eigenschaften aufweisen, dadurch gekennzeichnet, daß sie im wesentlichen aus einem thermoplastischen Copolymer des Vinylidenfluorids und von ethylenisch ungesättigten fluorierten Comonomeren, das wenigstens 75 Gew.-% von Vinylidenfluorid abgeleitete monomere Einheiten enthält, und aus Polyvinylchlorid, wobei das Gewichtsverhältnis des Vinylidenfluorid-Copolymers zu dem Polyvinylchlorid wenigstens gleich 1,2 ist und 9 nicht übersteigt, sowie aus einer wirksamen Menge an Methacrylpolymer, das in einem Anteil von wenigstens etwa 2 Gewichtsteilen und von nicht mehr als etwa 20 Gewichtsteilen pro 100 Gewichtsteile der Summe von Vinylidenfluorid-Copolymer und Polyvinylchlorid vorhanden ist, bestehen.

2. Zusammensetzungen auf der Basis von Vinylidenfluorid-Copolymeren gemäß Anspruch 1, dadurch gekennzeichnet, daß das Methacrylpolymer ausgewählt ist unter den Homopolymeren des Methylmethacrylats und seinen Copolymeren mit C2- bis C6-Alkyl-Acrylaten und/oder -Methacrylaten mit überwiegendem Gehalt an Methylmethacrylat.

3. Zusammensetzungen auf der Basis von Vinylidenfluorid-Copolymeren gemäß Anspruch 2, dadurch gekennzeichnet, daß das Methacrylpolymer ausgewählt ist unter den Copolymeren von Methylmethacrylat und von C2- bis C4-Alkyl-Acrylaten.

4. Zusammensetzungen auf der Basis von Vinylidenfluorid-Copolymeren gemäß einem der Ansprüche 1 bis 3, dadurch gekennzeichnet, daß das Methacrylpolymer wenigstens etwa 55 Gew.-% MMA und nicht mehr als etwa 90 Gew.-% enthält.

5. Zusammensetzungen auf der Basis von Vinylidenfluorid-Copolymeren gemäß einem der Ansprüche 1 bis 4, dadurch gekennzeichnet, daß das Methacrylpolymer in einer Menge von etwa 4 bis etwa 15 Gewichtsteilen pro 100 Gewichtsteile der Summe von Vinylidenfluorid-Copolymer und Polyvinylchlorid vorhanden ist.

6. Zusammensetzungen auf der Basis von Vinylidenfluorid-Copolymeren gemäß einem der Ansprüche 1 bis 5, dadurch gekennzeichnet, daß das Vinylidenfluorid-Copolymer ausgewählt ist unter den Copolymeren von Vinylidenfluorid und von Chlortrifluorethylen, die etwa 10 bis 25 Gew.-% Chlortrifluorethylen enthalten, und den Copolymeren von Vinylidenfluorid und von Hexafluorpropylen, die etwa 5 bis 20 Gew.-% Hexafluorpropylen enthalten.

7. Zusammensetzungen auf der Basis von Vinylidenfluorid-Copolymeren gemäß Anspruch 6, dadurch gekennzeichnet, daß das Vinylidenfluorid-Copolymer ein Copolymer von Vinylidenfluorid und von Chlortrifluorethylen ist, das etwa 12 bis 22 Gew.-% Chlortrifluorethylen enthält.

8. Zusammensetzungen auf der Basis von Vinylidenfluorid-Copolymeren gemäß einem der Ansprüche 1 bis 7, dadurch gekennzeichnet, daß sie im Compound-Zustand vorliegen.

9. Verwendung der Zusammensetzungen auf der Basis von Vinylidenfluorid-Copolymeren gemäß einem der Ansprüche 1 bis 8 zur Ummantelung von elektrischen Kabeln.

## Claims

1. Compositions based on vinylidene fluoride copolymers exhibiting improved dielectric properties, characterized in that they consist essentially of a thermoplastic copolymer of vinylidene fluoride and of ethylenically unsaturated fluorine-containing comonomers, containing at least 75 % by weight of monomer units derived from vinylidene fluoride and of polyvinyl chloride, the weight ratio of the vinylidene fluoride copolymer to the polyvinyl chloride is at least 1, 2 and does not exceed 9, and of an effective quantity of methacrylic polymer present in a proportion of at least approximately 2 parts by weight and of not more than approximately 20 parts by weight per 100 parts by weight of the total of vinylidene fluoride copolymer and of polyvinyl chloride.

2. Compositions based on vinylidene fluoride copolymers according to Claim 1, characterized in that the methacrylic polymer is chosen from methyl methacrylate homopolymers and copolymers which have a preponderant content of methyl methacrylate with C₂-C₆ alkyl acrylates and/or methacrylates.

3. Compositions based on vinylidene fluoride copolymers according to Claim 2, characterized in that the methacrylic polymer is chosen from copolymers of methyl methacrylate and of C₂-C₄ alkyl acrylates.

4. Compositions based on vinylidene fluoride copolymers according to any one of Claims 1 to 3, characterized in that the methacrylic polymer contains at least approximately 55 % by weight of MMA and not more than approximately 90 % by weight.

5. Compositions based on vinylidene fluoride copolymers according to any one of Claims 1 to 4, characterized in that the methacrylic polymer is present in a proportion of approximately 4 to approximately 15 parts by weight per 100 parts by weight of the total of vinylidene fluoride copolymer and of polyvinyl chloride.

6. Compositions based on vinylidene fluoride copolymers according to any one of Claims 1 to 5, characterized in that the vinylidene fluoride copolymer is chosen from copolymers of vinylidene fluoride and of chlorotrifluoroethylene, containing approximately from 10 to 25 % by weight of chlorotrifluoroethylene and copolymers of vinylidene fluoride and of hexafluoropropylene containing approximately from 5 to 20 % by weight of hexafluoropropylene.

7. Compositions based on vinylidene fluoride copolymers according to Claim 6, characterized in that the vinylidene fluoride copolymer is a copolymer of vinylidene fluoride and of chlorotrifluoroethylene, containing approximately from 12 to 22 % by weight of chlorotrifluoroethylene.

8. Compositions based on vinylidene fluoride copolymers according to any one of Claims 1 to 7, characterized in that they are in the form of compound.

9. Use of the compositions based on vinylidene fluoride copolymers according to any one of Claims 1 to 8 for the sheathing of electrical cables.
